# FASCICULE DE BREVET EUROPEEN

(11) **EP 3 243 723 B1**
(45) Date de publication et mention de la délivrance du brevet: **01.07.2020**
(21) Numéro de dépôt: 17170360.6
(22) Date de dépôt: 10.05.2017
(51) Int. Cl.: B61F 5/24, F16C 35/02, B61F 3/00, F16C 35/00

(54) **PALIER DE MONTAGE D'UNE BARRE ANTIROULIS SUR UN CHÂSSIS DE BOGIE, ET BOGIE CORRESPONDANT**
MONTAGELAGER EINES STABILISATORS AUF EINEM DREHGESTELLRAHMEN, UND ENTSPRECHENDES DREHGESTELL
MOUNTING BEARING OF AN ANTIROLL BAR ON A BOGIE FRAME AND CORRESPONDING BOGIE

(30) Priorité: 10.05.2016 FR 1654158
(43) Date de publication de la demande: 15.11.2017
(73) Titulaire: ALSTOM Transport Technologies, 93400 Saint-Ouen (FR)
(72) Inventeur: DEGUEURCE, Serge, 71670 Le Breuil (FR); PERREAUT, Julien, 71200 Le Creusot (FR); MUZYCZKA, Adalbert, 71210 Ecuisses (FR)
(74) Mandataire: Lavoix

(56) Documents cités:
- EP-A1- 0 918 008
- WO-A1-2004/091992
- WO-A1-2014/177417
- WO-A1-2015/166618
- KR-A- 20110 010 899
- KR-A- 20110 069 210

## Description

La présente invention concerne un palier de montage d'une barre antiroulis sur un châssis de bogie, la barre antiroulis s'étendant selon un axe transversal du bogie et étant mobile en rotation par rapport au châssis autour de l'axe, le palier comportant une première demi-coquille destinée à être solidaire mécaniquement du châssis, et une deuxième demi-coquille adaptée pour être fixée sur la première demi-coquille à l'aide d'un système de fixation, la première demi-coquille et la deuxième demi-coquille formant alors un logement traversant selon l'axe et adapté pour recevoir la barre antiroulis.

L'invention concerne également un bogie intégrant au moins deux paliers tels que décrits ci-dessus.

Il est connu, dans un bogie de véhicule ferroviaire, d'utiliser au moins une barre antiroulis s'étendant transversalement pour limiter le roulis du véhicule ferroviaire au niveau du bogie en question.

La barre antiroulis est en général fixée sur le châssis du bogie à l'aide de deux paliers. Chacun des paliers comprend une première partie usinée dans le châssis, donc venue de matière avec le châssis, et une deuxième partie destinée à être fixée sur la première partie, la barre antiroulis étant emprisonnée entre la première partie et la deuxième partie.

La première partie forme une demi-coquille assez difficile à usiner, et dont la fabrication prend donc un certain temps. Il en résulte un coût de fabrication relativement élevé de chaque palier de montage, et donc du bogie lui-même.

KR-A-2011 0010899 et KR-A-2011 0069210 décrivent des paliers de montage.

Le document KR 2011 0010899 A décrit un palier de montage d'une barre antiroulis sur un châssis de bogie, la barre antiroulis s'étendant selon un axe transversal du bogie et étant mobile en rotation par rapport au châssis autour de l'axe, le palier comportant une première demi-coquille destinée à être solidaire mécaniquement du châssis, et une deuxième demi-coquille adaptée pour être fixée sur la première demi-coquille à l'aide d'un premier système de fixation, la première demi-coquille et la deuxième demi-coquille formant alors un logement traversant selon l'axe et adapté pour recevoir la barre antiroulis, où la première demi-coquille est distincte du châssis et adaptée pour être fixée sur le châssis à l'aide d'un deuxième système de fixation.

Le document KR 2011 0069210 A décrit un palier de montage d'une barre antiroulis sur un châssis de bogie. Le palier comporte une première demi-coquille adaptée pour être fixée sur le châssis et une deuxième demi-coquille, adaptée pour être fixée sur la première demi-coquille à l'aide d'un premier système de fixation. La première demi-coquille est adaptée pour être fixée au châssis à l'aide d'un deuxième système de fixation formé de vis, distinct du premier système de fixation. En effet, les vis ne permettent pas de fixer la première demi-coquille à la deuxième demi-coquille.

Un but de l'invention est donc de palier tout ou partie de l'inconvénient précité, c'est-à-dire de réduire les coûts liés au montage de la barre antiroulis sur le châssis de bogie.

A cet effet, l'invention a pour objet un palier de montage selon la revendication 1.

Selon des modes de réalisation particuliers, le palier comprend l'une ou plusieurs des caractéristiques correspondant aux revendications 2 à 7, prise(s) selon toutes les combinaisons techniquement possibles.

L'invention a également pour objet un bogie selon la revendication 8.

Selon un mode de réalisation particulier, le châssis comporte les caractéristiques correspondant à la revendication 9.

L'invention sera mieux comprise à la lecture de la description qui va suivre, donnée uniquement à titre d'exemple et faite en se référant aux dessins annexés, sur lesquels :
- la figure 1 est une vue partielle d'un bogie selon l'invention, et
- la figure 2 est une vue en perspective d'un des paliers et de la barre antiroulis représentés sur la figure 1.

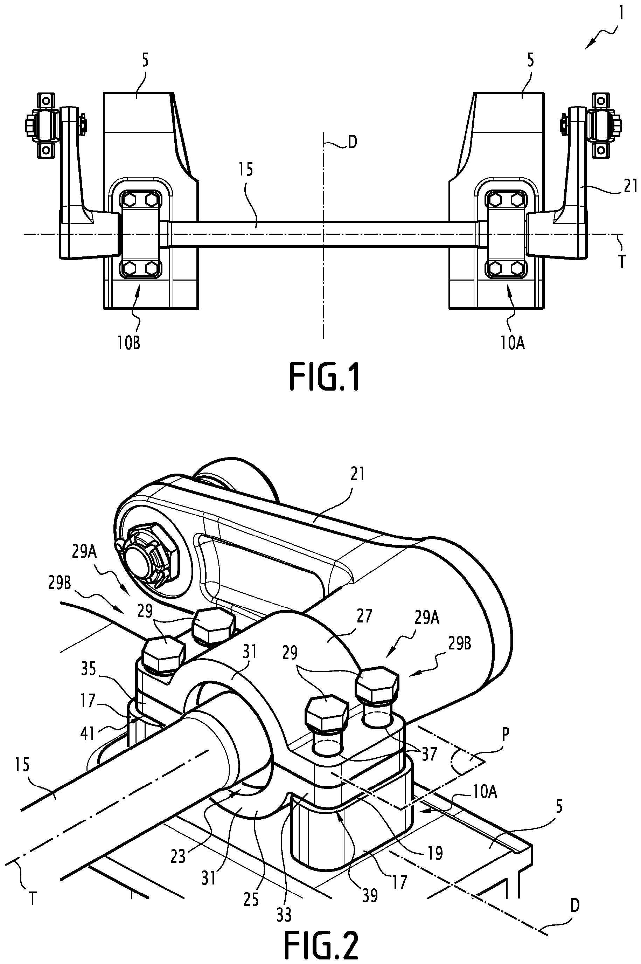

En référence aux figures 1 et 2, on décrit un bogie 1 selon l'invention. Le bogie 1 est destiné à faire partie d'un véhicule ferroviaire (non représenté).

Le bogie 1 comprend un châssis 5 représenté partiellement sur la figure 1, au moins deux paliers 10A et 10B, et au moins une barre antiroulis 15 reçue dans les deux paliers.

Le châssis 5 comporte au moins quatre protubérances 17 dont deux sont visibles sur la figure 2, les deux autres étant analogues aux deux représentées.

Les protubérances 17 représentées sur la figure 2 sont adaptées pour la fixation du palier 10A. Les protubérances 17 sont usinées dans le châssis 5 et ont avantageusement une forme simple à usiner, par exemple dépourvue de toute partie en creux.

Chaque protubérance 17 comporte une face 19 adaptée pour coopérer avec l'un des paliers 10A, 10B.

Les deux protubérances 17 non représentées sur la figure 2 sont adaptées pour la fixation du palier 10B.

La barre antiroulis 15 s'étend selon un axe T sensiblement transversal par rapport au bogie 1. La barre antiroulis 15 est mobile en rotation par rapport au châssis 5 autour de l'axe T du fait du roulis. Dans l'exemple, la barre antiroulis 15 est connectée à des bras 21 à ses deux extrémités transversales.

Les paliers 10A, 10B sont avantageusement analogues l'un à l'autre, aussi seul le palier 10A, mieux visible sur la figure 2, sera décrit ci-après.

Le palier 10A forme un logement 23 traversant selon l'axe T et adapté pour recevoir la barre antiroulis 15. Le palier 10A comprend une première demi-coquille 25 adaptée pour être fixée sur le châssis 5, une deuxième demi-coquille 27 adaptée pour être fixée sur la première demi-coquille. Le palier 10A comprend aussi un premier système de fixation 29A pour fixer la deuxième demi-coquille 27 sur la première demi-coquille 25, et un deuxième système de fixation 29B pour fixer la première demi-coquille sur le châssis 5.

Le premier système de fixation 29A et le deuxième système de fixation 29B sont avantageusement confondus, et constitués de vis de fixation 29.

La première demi-coquille 25 et la deuxième demi-coquille 27 sont avantageusement analogues l'une à l'autre et disposées symétriquement par rapport à un plan médian P du palier 10A.

Le plan médian P est par exemple parallèle à l'axe T et aux faces 19 des protubérances 17. Avantageusement, le plan médian P contient l'axe T.

Les vis de fixation 29 sont par exemple au nombre de quatre. Les vis de fixation 29 traversent la deuxième demi-coquille 27, puis la première demi-coquille 25 et sont vissées dans les protubérances 17 du châssis 5.

Seule la première demi-coquille 25 sera décrite en détail ci-après.

La première demi-coquille 25 comprend une partie centrale 31 formant un berceau hémicylindrique, et deux pattes de fixation 33, 35 situées de part et d'autre de la partie centrale selon une direction D sensiblement perpendiculaire à l'axe T.

La direction D est par exemple parallèle au plan médian P.

Chaque patte de fixation 33, 35 comporte deux perçages 37 adaptés pour recevoir les vis de fixation 29.

Les deux pattes de fixation 33, 35 s'étendent dans le prolongement l'une de l'autre selon la direction D.

Les pattes de fixation 33, 35 de la première demi-coquille 25 comportent respectivement deux faces d'appui 39, 41 s'appuyant respectivement sur les faces 19 des protubérances 17.

Les faces d'appui 39, 41 sont sensiblement parallèles au plan médian P.

Les perçages 37 sont par exemple réalisés perpendiculairement au plan médian P.

Le montage de la barre antiroulis 15 sur le châssis 5 du bogie 1 va maintenant être décrit.

Les quatre protubérances 17 sont préalablement usinées dans le châssis 5.

Puis, les premières demi-coquilles 25 des paliers 10A, 10B sont respectivement disposées sur les protubérances 17. Les faces d'appui 19, 41 des pattes de fixation 33, 35 sont en contact avec les faces 19 des protubérances 17. La partie centrale 31 de chaque première demi-coquille 25 est dirigée vers le châssis 5.

La barre antiroulis 5 est alors disposée dans les berceaux formés par les parties centrales 31 des premières demi-coquilles 25 de chacun des paliers 10A, 10B.

Ensuite, les deuxièmes demi-coquilles 27 sont disposées sur les premières demi-coquilles 25 comme représenté sur la figure 2. Les parties centrales 31 des deuxièmes demi-coquilles 27 sont dirigées à l'opposé du châssis 5, de sorte que, pour chacun des paliers 10A, 10B, le logement 23 possède une section circulaire.

Enfin, les vis de fixation 29 sont placées dans les perçages 37 alignés des pattes de fixation 33, 35 de la première demi-coquille 25 et de la deuxième demi-coquille 27, et sont vissées dans les protubérances 17.

La barre antiroulis 15 est alors emprisonnée dans les logements 23 des paliers 10A, 10B.

Grâce aux caractéristiques décrites ci-dessus, le coût du bogie 1 est réduit. En effet, les protubérances 17 sont faciles à usiner, et la première demi-coquille 25 et la deuxième demi-coquille 27 de chaque palier 10A, 10B sont simples à réaliser.

Contrairement à l'état de la technique, les palies 10A, 10B selon l'invention ne comprennent pas de partie en courbe usinée dans le châssis 5 du bogie 1.

En outre, la caractéristique optionnelle selon laquelle la deuxième demi-coquille 27 est analogue à la première demi-coquille 25 permet de ne produire qu'un seul type de demi-coquille pour réaliser les paliers 10A, 10B.

De plus, le premier système de fixation 29A et le deuxième système de fixation 29B étant confondus, la fixation de la première demi-coquille 25 et de la deuxième demi-coquille 27 est réalisée conjointement.

## Revendications

1. Palier (10A) de montage d'une barre antiroulis (15) sur un châssis (5) de bogie (1), la barre antiroulis (15) s'étendant selon un axe (T) transversal du bogie (1) et étant mobile en rotation par rapport au châssis (5) autour de l'axe (T), le palier (10A) comportant une première demi-coquille (25) destinée à être solidaire mécaniquement du châssis (5), et une deuxième demi-coquille (27) adaptée pour être fixée sur la première demi-coquille (25) à l'aide d'un premier système de fixation (29A), la première demi-coquille (25) et la deuxième demi-coquille (27) formant alors un logement (23) traversant selon l'axe (T) et adapté pour recevoir la barre antiroulis, la première demi-coquille (25) étant distincte du châssis (5) et étant adaptée pour être fixée sur le châssis (5) à l'aide d'un deuxième système de fixation (29B),
**caractérisé en ce que** le premier système de fixation (29A) et le deuxième système de fixation (29B) sont confondus et sont formés par des vis de fixation (29) traversant la première demi-coquille (25) et la deuxième demi-coquille (27).

2. Palier (10A) selon la revendication 1, dans lequel le deuxième système de fixation comprend des vis de fixation (29) traversant la première demi-coquille (25) et destinées à être vissées dans le châssis (5).

3. Palier (10A) selon la revendication 2, dans lequel la première demi-coquille (25) et la deuxième demi-coquille (27) sont structurellement analogues l'une à l'autre.

4. Palier (10A) selon l'une quelconque des revendications 1 à 3, dans lequel la première demi-coquille (25) et la deuxième demi-coquille (27) sont disposées symétriquement par rapport à un plan médian (P) du palier (10A), le plan médian (P) passant par l'axe (T).

5. Palier (10A) selon l'une quelconque des revendications 1 à 4, dans lequel chacune de la première demi-coquille (25) et la deuxième demi-coquille (27) comprend :
- une partie centrale (31) formant un berceau hémicylindrique, et
- deux pattes de fixation (33, 35) situées de part et d'autre de la partie centrale (31) selon une direction (D) sensiblement perpendiculaire à l'axe (T), chaque patte de fixation (33, 35) comportant au moins un perçage (37) prévu pour le premier système de fixation (29A) et/ou le deuxième système de fixation (29B).

6. Palier (10A) selon la revendication 5, dans lequel les pattes de fixation (33, 35) de la première demi-coquille (25) comportent respectivement deux faces d'appui (39, 41) destinées à s'appuyer respectivement sur deux protubérances (17) du châssis (5).

7. Palier (10A) selon la revendication 5 ou 6, dans lequel le premier système de fixation (29A) et le deuxième système de fixation (29B) sont respectivement formés par deux paires de vis de fixation (29), les paires de vis de fixation étant fixées respectivement dans les pattes de fixation (33, 35).

8. Bogie (1) comprenant :
- un châssis (5),
- au moins deux paliers (10A, 10B) selon l'une quelconque des revendications 1 à 7, et
- au moins une barre antiroulis (15) reçue dans les logements (23) formés par les deux paliers (10A, 10B).

9. Bogie (1) selon la revendication 8, dans lequel le châssis (5) comporte au moins quatre protubérances (17), chacune des premières demi-coquilles (25) étant fixées sur deux des protubérances (17).

## Patentansprüche

1. Lager (10A) zum Montieren eines Stabilisators (15) an einem Rahmen (5) eines Drehgestells (1), wobei der Stabilisator (15) sich gemäß einer Querachse (T) des Drehgestells (1) erstreckt und hinsichtlich der Drehung in Bezug auf den Rahmen (5) um die Achse (T) beweglich ist, wobei das Lager (10A) eine erste Halbschale (25), die vorgesehen ist, mechanisch mit dem Rahmen (5) verbunden zu sein, und eine zweite Halbschale (27) aufweist, die angepasst ist, an der ersten Halbschale (25) mithilfe eines ersten Befestigungssystems (29A) befestigt zu werden, wobei die erste Halbschale (25) und die zweite Halbschale (27) dann einen gemäß der Achse (T) durchgehenden Aufnahmeraum (23) bilden, der geeignet ist, den Stabilisator aufzunehmen, wobei die erste Halbschale (25) getrennt vom Rahmen (5) ist und ausgebildet ist, an dem Rahmen (5) mithilfe eines zweiten Befestigungssystems (29B) befestigt zu werden,
**dadurch gekennzeichnet, dass** das erste Befestigungssystem (29A) und das zweite Befestigungssystem (29B) gleich sind und von Befestigungsschrauben (29) gebildet werden, die die erste Halbschale (25) und die zweite Halbschale (27) durchgreifen.

2. Lager (10A) nach Anspruch 1, bei dem das zweite Befestigungssystem Befestigungsschrauben (29) umfasst, die die erste Halbschale (25) durchgreifen und vorgesehen sind, in den Rahmen (5) geschraubt zu werden.

3. Lager (10A) nach Anspruch 2, bei dem die erste Halbschale (25) und die zweite Halbschale (27) strukturell analog zueinander sind.

4. Lager (10A) nach einem beliebigen der Ansprüche 1 bis 3, bei dem die erste Halbschale (25) und die zweite Halbschale (27) symmetrisch in Bezug auf eine Mittelebene (P) des Lagers (10A) angeordnet sind, wobei die Mittelebene (P) durch die Achse (T) hindurch geht.

5. Lager (10A) nach einem beliebigen der Ansprüche 1 bis 4, bei dem jede der ersten Halbschale (25) und der zweiten Halbschale (27) umfasst:
- ein Mittelteil (31), das einen halbzylindrischen Bogen bildet und
- zwei Befestigungsansätze (33, 35) die beidseitig des Mittelteils (31) gemäß einer Richtung (D) im Wesentlichen senkrecht zur Achse (T) liegen, wobei jeder Befestigungsansatz (33, 35) mindestens eine Bohrung (37) aufweist, die für das erste Befestigungssystem (29A) und/oder das zweite Befestigungssystem (29B) vorgesehen ist.

6. Lager (10A) nach Anspruch 5, bei dem die Befestigungsansätze (33, 35) der ersten Halbschale (25) jeweils zwei Auflageflächen (39, 41) aufweisen, die vorgesehen sind, sich jeweils auf zwei Vorsprüngen (17) des Rahmens (5) abzustützen.

7. Lager (10A) nach Anspruch 5 oder 6, bei dem das erste Befestigungssystem (29A) und das zweite Befestigungssystem (29B) jeweils durch zwei Paare von Befestigungsschrauben (29) gebildet sind, wobei die Paare von Befestigungsschrauben jeweils in den Befestigungsansätzen (33, 35) befestigt sind.

8. Drehgestell (1) umfassend:
- einen Rahmen (5),
- mindestens zwei Lager (10A, 10B) nach einem beliebigen der Ansprüche 1 bis 7 und
- mindestens einen Stabilisator, der in den Aufnahmen (23) aufgenommen ist, die von den zwei Lagern (10A, 10B) gebildet werden.

9. Drehgestell (1) nach Anspruch 8, bei dem der Rahmen (5) mindestens vier Vorsprünge (17) aufweist, wobei jede der ersten Halbschalen (25) auf zwei der Vorsprünge (17) befestigt ist.

## Claims

1. A bearing (10A) for mounting an anti-roll bar (15) on a frame (5) of a bogie (1), the anti-roll bar (15) extending along a transverse axis (T) of the bogie (1) and being mobile in rotation relatively to the frame (5) around the axis (T), the bearing (10A) including a first half-shell (25) intended to be mechanically secured to the frame (5), and a second half-shell (27) adapted so as to be attached on the first half-shell (25) by means of a first attachment system (29A), the first half-shell (25) and the second half-shell (27) then forming a housing (23) crossing through along the axis (T) and adapted for receiving the anti-roll bar, the first half-shell (25) being distinct from the frame (5) and being adapted so as to be attached on the frame (5) by means of a second attachment system (29B),
**characterized in that** the first attachment system (29A) and the second attachment system (29B) coincide and are formed by attachment screws (29) crossing the first half-shell (25) and the second half-shell (27).

2. The bearing (10A) according to claim 1, wherein the second attachment system comprises attachment screws (29) crossing the first half-shell (25) and intended to be screwed into the frame (5).

3. The bearing (10A) according to claim 2, wherein the first half-shell (25) and the second half-shell (27) are structurally analogue with each other.

4. The bearing (10A) according to any of claims 1 to 3, wherein the first half-shell (25) and the second half-shell (27) are symmetrically positioned relatively to a middle plane (P) of the bearing (10A), the middle plane (P) passing through the axis (T).

5. The bearing (10A) according to any of claims 1 to 4, wherein each of the first half-shell (25) and the second half-shell (27) comprises:
- a central portion (31) forming a hemicylindrical cradle, and
- two attachment tabs (33, 35) located on either side of the central portion (31) along a direction (D) substantially perpendicular to the axis (T), each attachment tab (33, 35) including at least one pierced hole (37) provided for the first attachment system (29A) and/or the second attachment system (29B).

6. The bearing (10A) according to claim 5, wherein the attachment tabs (33, 35) of the first half-shell (25) respectively include two supporting faces (39, 41) intended to respectively press on the two protrusions (17) of the frame (5).

7. The bearing (10A) according to claim 5 or 6, wherein the first attachment system (29A) and the second attachment system (29B) are respectively formed with two pairs of attachment screws (29), the pairs of attachment screws being respectively attached in the attachment tabs (33, 35).

8. A bogie (1) comprising:
- a frame (5),
- at least two bearings (10A, 10B) according to any of claims 1 to 7, and
- at least one anti-roll bar (15) received in the housings (23) formed by both bearings (10A, 10B).

9. The bogie (1) according to claim 8, wherein the frame (5) includes at least four protrusions (17), each of the first half-shells (25) being attached on two of the protrusions (17).
